# EUROPÄISCHE PATENTSCHRIFT

(11) **EP 0 464 296 B1**
(45) Veröffentlichungstag und Bekanntmachung des Hinweises auf die Patenterteilung: **21.09.1994**
(21) Anmeldenummer: 90810770.9
(22) Anmeldetag: 08.10.1990
(51) Int. Cl.: B23K 26/10, B23K 26/00

(54) **Anlage zum Schneiden eines Werkstücks und Verfahren zur Steuerung derselben**
Installation for cutting workpieces and process for controlling the same
Installation pour couper une pièce et procédé de conduite de celle-ci

(30) Priorität: 04.07.1990 CH 2226/90
(43) Veröffentlichungstag der Anmeldung: 08.01.1992
(73) Patentinhaber: Bystronic Laser AG, CH-3362 Niederönz (CH)
(72) Erfinder: Zumstein, Ernst, CH-3400 Burgdorf (CH)
(74) Vertreter: AMMANN PATENTANWAELTE AG BERN

(56) Entgegenhaltungen:
- EP-A- 0 327 895
- PATENT ABSTRACTS OF JAPAN vol. 13, no. 77 (M-801)(3425) 22. Februar 1989
- PATENT ABSTRACTS OF JAPAN vol. 12, no. 182 (M-702)(3029) 27. Mai 1988
- PATENT ABSTRACTS OF JAPAN vol. 13, no. 67 (M-798)(3415) 15. Februar 1989

## Beschreibung

Die vorliegende Erfindung betrifft eine Anlage zum Schneiden eines Werkstücks gemäss Oberbegriff des Anspruchs 1. Eine solche Anlage ist bekannt aus der EP-A-0 327 895. Stützlamellen können einzeln mechanisch durch den Schneidkopf gesteuert abgesenkt werden. Der Vorteil dieser Anlage besteht darin, dass die Stützlamellen im Bereiche des Laserstrahls soweit vom Werkstück entfernt werden können, dass sie weder den Schneidvorgang behindern noch vom Laserstrahl beschädigt werden können, und dass sie auch keine Reflexionen verursachen können, welche das Werkstück an der Unterseite beschädigen könnten. Diese bekannte, rein mechanisch arbeitende Anlage ist aber nicht in der Lage weitere Funktionen zu erfüllen.

Es ist auch bekannt, ausser starren Stützelementen schwenkbare Stützplatten vorzusehen, die durch die Programmsteuerung der Anlage alle gemeinsam entweder an das Werkstück herangeschwenkt oder von demselben weggeschwenkt werden können. Dabei werden die Stützplatten an das Werkstück herangeschwenkt um dasselbe beim Schneiden zu stabilisieren und damit die Schnittqualität zu verbessern. Eine solche Anlage ist aus JP-A-63 278 694 bekannt.

Der vorliegenden Erfindung liegt die Aufgabe zu Grunde, die beweglichen Stützelemente so anzuordnen und zu steuern, dass sie abgesehen von den oben erwähnten andere Funktionen übernehmen können. Diese Aufgabe wird gemäss dem Kennzeichen des Anspruchs 1 gelöst. Damit fällt nicht nur die unbequeme und störungsanfällige mechanische Betätigung der Stützelemente weg, sondern es wird möglich das Programm derart zu gestalten, dass Stützelemente einzeln, in Gruppen oder alle Stützelemente bewegt werden können. Vorzugsweise werden die Stützelemente herabschwenkbar ausgeführt. Damit wird es möglich, durch Herunterschwenken einzelner Gruppen von Stützelementen ausgeschnittene Teile herunterfallen zu lassen und wegzutransportieren oder Restgitter aus welchen alle Teile ausgeschnitten worden sind, durch Herunterschwenken aller Stützelemente bzw. des gesamten Rostes herunterfallen zu lassen und wegzutransportieren.

Die Erfindung wird im folgenden anhand von in der Zeichnung dargestellten Ausführungsbeispielen näher erläutert.
- Fig. 1: ist eine Seitenansicht der ersten Anlage,
- Fig. 2: ist eine Stirnansicht derselben,
- Fig. 3: ist eine Seitenansicht der zweiten Anlage,
- Fig. 4: zeigt einen Teilschnitt durch die zweite Anlage,
- Fig. 5: ist eine Teil-Draufsicht auf die zweite Anlage und
- Fig. 6: zeigt eine Ausführungsvariante.

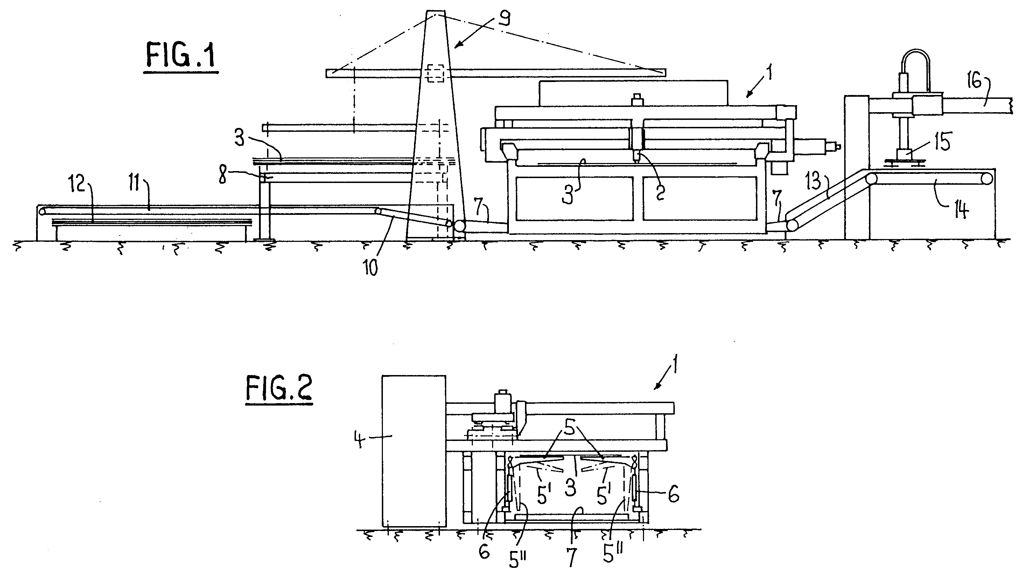

Die in Fig. 1 und 2 dargestellte Anlage weist eine eigentliche Laserschneidmaschine 1 mit einem Schneidkopf 2 auf. Mittels dieses Schneidkopfes 2 werden Teile aus einer Platte 3, beispielsweise einer Stahlplatte, ausgeschnitten. Der Schneidkopf 2 kann in an sich üblicher Weise über dem Werkstück 3, längs und quer verfahren werden. Die CNC-Steuerung der Bewegung des Schneidkopfes 2 erfolgt mittels einer Programmsteuerung, die in einem nicht dargestellten Schrank untergebracht ist. Der Lasserstrahl wird mittels beweglicher Spiegel vom Laserresonator 4 zum Schneidkopf 2 geführt. Wie die Figur 2 zeigt, ist die Platte 3 auf einem Rost abgestützt, welcher aus schwenkbaren Armen oder Lamellen 5 besteht. Diese Stützarme 5 weisen je eine Länge auf, die etwa der halben Breite der Bearbeitungsfläche bzw. des Stützrostes entspricht, und sie sind je an ihrem äusseren Ende schwenkbar gelagert. Mittels hydraulischer oder pneumatischer Zylinder 6 können die Stützarme entweder gegen Anschlag in der ausgezogenen horizontalen Stützstellung gehalten werden, in welcher sie die Platte 3 unterstützen oder sie können teilweise in eine abgesenkte Stellung 5' oder in eine voll abgesenkte Stellung 5'' heruntergeschwenkt werden. Die Stellungen bzw. Bewegungen jedes einzelnen Stützarmes sind programmgesteuert durch gemeinsame Programmsteuerung für den Schneidkopf 2 und die Stützarme 5.

Unter den Stützarmen 5 ist ein Förderband 7 angeordnet, welches in beiden Richtungen angetrieben bzw. bewegt werden kann.

Vor der eigentlichen Laserschneidmaschine 1 ist ein Tisch 8 angeordnet, auf welchen unbearbeitete Platten 3 angefördert werden. Mittels eines Transportsystems 9 können einzelne Platten 3 vom Tisch 8 in die Bearbeitungsposition in der Schneidmaschine 1 gebracht werden. Unter dem Tisch 8 sind Förderbänder 10 und 11 angeordnet, die der Entsorgung von Restgittern auf einen Stapel 12 dienen. Weitere Förderbänder 13 und 14 an der Hinterseite der Schneidmaschine 1 dienen dem Abtransport ausgeschnittener Teile, die vom Förderband 14 mittels eines Greifers 15 übernommen und längs einer Führungsschiene 16 weitertransportiert werden können.

Zum Ausschneiden von Teilen aus einer Platte 3 wird der Schneidkopf 2 in an sich bekannter Weise nach einem bestimmten Programm gesteuert. Das gleiche Programm rechnet Daten zur Steuerung der Stützarme 5 derart, dass jeweils derjenige Stützarm in die Position 5' heruntergeschwenkt wird, wenn der Laserstrahl sich im Bereiche dieses Stützarmes befindet. Damit wird, wie erwähnt vermieden, dass der Schneidvorgang durch den Stützarm behindert, der Stützarm beschädigt oder durch Reflexion des Laserstrahls am Stützarm die Unterseite der Platte beschädigt wird. Ist ein Teil vollständig ausgeschnitten, wird je nach Grösse dieses Teils ein Stützarm oder eine ganze Gruppe von Stützarmen in die Position 5'' abgesenkt, so dass der Teil auf das Förderband 7 herunterfällt. Dabei können nur einseitig oder beidseitig Stützarme abgesenkt werden. Die Teile werden dann mittels des Förderbandes 7 und der Förderbänder 13 und 14 sowie des Greifers 15 laufend abtransportiert. Da alle Teile sogleich nach dem Ausschneiden vom Stützrost entfernt werden, besteht auch keine Gefahr, dass lockere Teile sich verschieben und das Ausschneiden weiterer Teile behindern oder dabei beschädigt werden. Sind alle Teile ausgeschnitten und abtransportiert, werden alle Stützarme 5 oder jedenfalls so viele Stützarme als erforderlich in die Position 5'' heruntergeschwenkt, womit das verbleibende Restgitter der Platte 3 auf das Förderband 7 herunterfällt. Das Förderband 7 wird nun im umgekehrten Sinne angetrieben und das Restgitter wird mittels dieses Förderbandes sowie der Förderbänder 10 und 11 auf den Stapel 12 abtransportiert. Inzwischen können die Stützarme 5 schon wieder hochgeschwenkt werden zur Uebernahme einer neuen Platte 3, und ein neuer Schneidvorgang kann praktisch ohne Verzögerung beginnen.

Wie erwähnt, erfolgt die Steuerung der Stützarme 5 über den Zylindern 6 zugeordnete Elektroventile durch die zentrale Programmsteuerung, welche koordiniert ist mit der Steuerung des Schneidkopfes 2. Die horizontale Stützposition der Arme 5 sowie ihre ganz heruntergeschwenkte Position 5'' können durch mechanische Anschläge bestimmt werden. Die mittlere Position 5', die nicht genau bestimmt sein muss, kann durch zeitlich bemessenes Zuführen von Druckmittel zu dem oder den betreffenden Zylindern eingestellt werden. Es könnte aber auch eine andere Anordnung getroffen sein. Die Arme könnten beispielsweise elektromechanisch betätigt werden. Statt verschwenkt könnten die Stützarme auch seitlich herausgezogen werden. Zum Abführen von Teilen könnten einzelne oder Gruppen von Stützarmen auch nur teilweise abgesenkt werden.

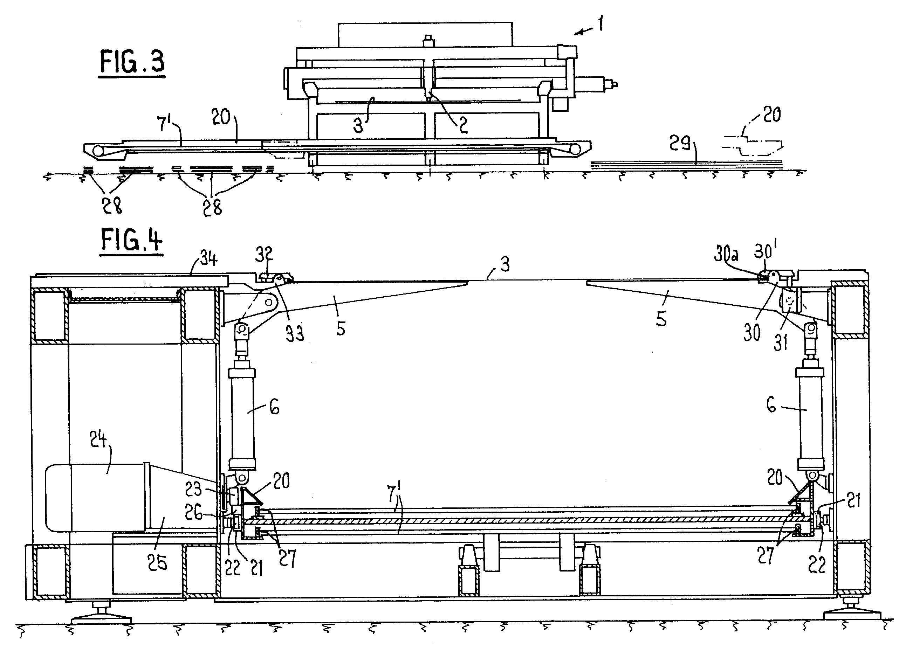

Die Fig. 3 bis 5 zeigen eine zweite Ausführungsform, wobei entsprechende Teile der Anlage gleich bezeichnet sind wie in den Fig. 1 und 2. In Fig. 3 ist nur die eigentliche Laser-Schneidmaschine 1 dargestellt. Ein wesentlicher Unterschied zur Ausführung nach Fig. 1 und 2 besteht darin, dass anstelle der Förderbänder 7, 10, 11, 13 und 14 ein einziges Förderband 7' vorgesehen ist, das aber in einem in Längsrichtung hin- und herbewegbaren Schlitten 20 angeordnet ist. Dieser Schlitten 20 ist in Fig. 4 im Querschnitt dargestellt. Seine seitlichen, mit 20 bezeichneten Längsprofile sind mittels U-Schienen 21 und Rollensätzen 22 geführt. Ein Ritzel 23, das von einem Motor 24 über ein Getriebe 25 antreibbar ist, greift in eine Zahnstange 26 des Schlittens 20, womit der Schlitten in Längsrichtung verschoben werden kann. Die beiden Trumme des Förderbandes 7' sind mittels Rollen 27 in den Längsprofilen des Schlittens abgestützt. Fig. 3 zeigt die übliche Betriebslage des Schlittens 20 bzw. des Förderbandes 7', nach links ausladend zum Abtransport ausgeschnittener Teile auf Stapel 28. Die Zufuhr neuer, unbearbeiteter Platten kann gleich erfolgen wie anhand der Fig. 1 und 2 beschrieben, oder anders, gegebenenfalls quer zur Förderrichtung des Förderbandes 7',

Zum Abführen eines Restgitters 12, das gemäss Obenstehendem durch Absenken aller Stützarme 5 auf das Förderband gelangt ist, wird bei stillstehendem Förderband 7' der Schlitten 20 in die Fig. 3 in strichpunktierten Linien angedeutete Endlage gebracht. Dann wird der Antrieb des Förderbandes 7' eingeschaltet, um das Restgitter 12 über das rechte Ende des Schlittens 20 hinauszufördern, und mit gleicher Geschwindigkeit wird der Schlitten 20 nach links zurückgezogen. Das Restgitter wird dabei ohne Geschwindigkeit auf einen Stapel 29 abgelegt.

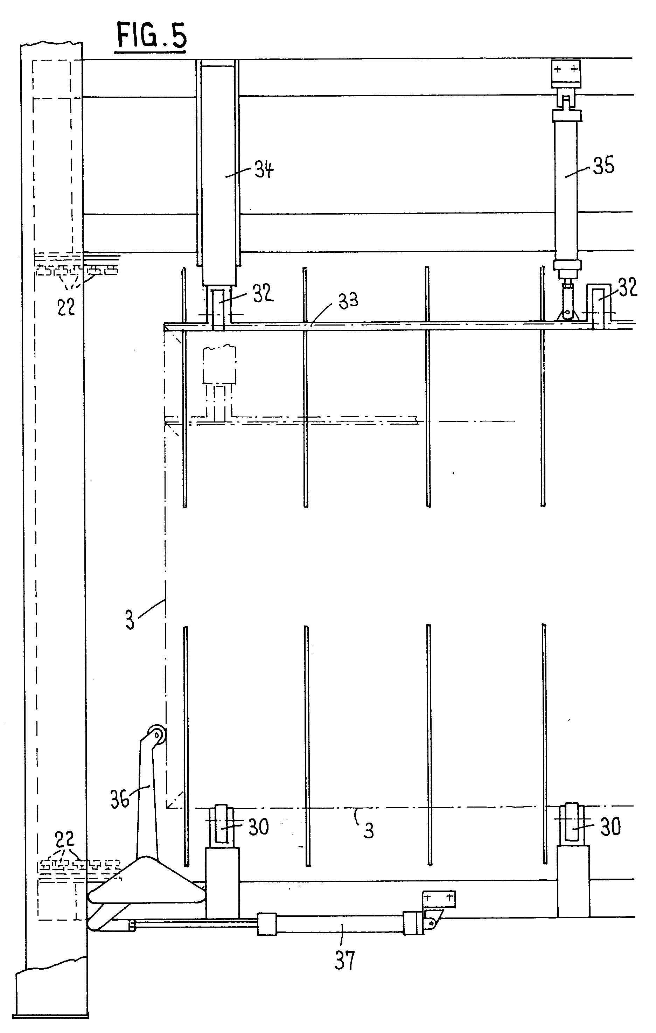

Bei der Ausführung gemäss Fig. 3 bis 5 sind besondere Spann- oder Haltezangen für die zu bearbeitende Platte vorgesehen. Entsprechende Zangen könnten auch bei der Ausführung nach Fig. 1 und 2 vorhanden sein. An einer Längsseite des Stützrostes sind ortsfeste Haltezangen 30 angeordnet, deren oberer Klemmhebel 30' mittels eines pneumatischen Zylinders 31 betätigbar ist. Auf der gegenüberliegenden Längsseite sind gleichartige, aber bewegliche Haltezangen vorgesehen, deren Klemmhebel 32 durch nicht dargestellte Zylinder betätigbar sind. Diese beweglichen Haltezangen sind durch eine in Fig. 5 schematisch dargestellte Anschlagschiene verbunden, die an den beiden Enden mit Führungen 34 versehen ist und in deren Mitte ein Betätigungszylinder 35 angreift. In Fig. 5 ist ferner ein Positionierungshebel 36 dargestellt, der mittels eines Zylinders 37 betätigt werden kann, um die aufgelegte Platte in Längsrichtung zu positionieren.

Beim Auflegen einer neuen Platte 3 sind die Anschlagschiene 33 mit den Zangen 32 sowie der Positionierungshebel 36 soweit zurückgezogen, dass die Platte frei aufgelegt werden kann. Dann werden der Hebel 36 und die Anschlagschiene 33 gegen die anliegenden Plattenränder angelegt und die Platte bis zu den gegenüberliegenden Anschlägen geschoben und damit positioniert.

In Querrichtung sind diese Anschläge durch die Schultern 30a der Zangen 30 gebildet. Dann werden die Haltezangen 30 und 32 geschlossen, um die Platte 3 festzuhalten. Das ist von besonderer Wichtigkeit, weil der Stützrost während der Bearbeitung nicht stabil ist. Nach beendigter Bearbeitung können die Haltezangen 30 und 32 geschlossen bleiben, bis die Stützarme 5 ganz abgesenkt sind, worauf die Haltezangen das Restgitter freigeben und auf das Förderband fallen lassen. Damit wird vermieden, dass das Restgitter über die sich senkenden Stützarme herunterrutscht und deren Stützflächen beschädigt.

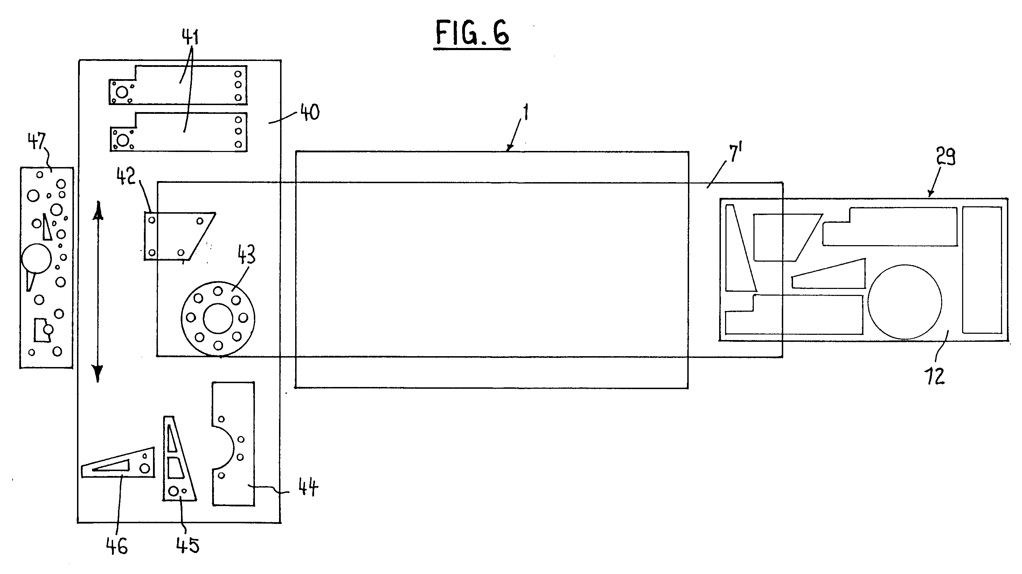

In Fig. 6 ist schematisch eine Ausführungsvariante der Anlage dargestellt. Die Schneidmaschine 1 und das Förderband 7' entsprechen den oben beschriebenen Anlageteilen. Das Förderband 7' dient hier in gleicher Weise zum Abtransport und dem Ablegen von Restgittern 12 auf den Stapel 29 sowie von ausgeschnittenen Teilen 41 bis 46 und Abfällen. Die Teile werden auf einen quer zur Förderrichtung des Förderbandes 7' verstellbaren Tisch 40 abgelegt. Abfälle, d. h., aus den einzelnen Teilen 40 bis 46 ausgeschnittene Teile werden in einen Abfallbehälter 47 gefördert. Zum Ablegen der einzelnen Teile 41 bis 46 auf den Tisch 40 wird jeweils dieser Tisch in die entsprechende Lage gebracht und der Schlitten 20 mit dem Förderband 7' soweit ausgefahren, dass dann der Teil durch gleichzeitiges Antreiben des Förderbandes nach links und Zurückziehen des Schlittens 20 mit gleicher Geschwindigkeit nach rechts (Fig. 6) auf den richtigen Stapel von Teilen abgelegt wird. Man kommt in diesem Falle ohne Greifer oder dergleichen Hilfsvorrichtungen zum Sortieren der Teile aus.

Die oben beschriebenen Ausführungsbeispiele betreffen Laserschneidanlagen. Die erfindungsgemässe Anordnung wäre jedoch mit Vorteil auch anwendbar für andere Schneidvorgänge beispielsweise beim Wasserstrahlschneiden, beim Bearbeiten mit Teilchenstrahlungen oder mit einer Schneidflamme.

## Patentansprüche

1. Anlage zum Schneiden eines Werkstücks (3), insbesondere flachen Werkstücks, mittels eines Strahls, insbesondere Laserstrahl, mit einem Rost von Stützelementen (5) für das Werkstück (3), welche alle aus einer Stützposition in eine unwirksame Position vom Werkstück entfernbar sind, dadurch gekennzeichnet, dass eine gemeinsame Programmsteuerung für die Bewegung des Strahls längs einer Schnittlinie und zur individuellen Bewegung jedes Stützelementes (5) vorgesehen ist, um beliebige Gruppen von Stützelementen (5) oder alle Stützelemente (5) entfernen zu können und damit ausgeschnittene Werkstücke beliebiger Abmessung oder Restgitter ausfallen zu lassen.

2. Anlage, nach Anspruch 1, dadurch gekennzeichnet, dass die Stützelemente (5) herabschwenkbar oder seitlich herausbewegbar sind.

3. Anlage nach Anspruch 2, dadurch gekennzeichnet, dass sich unter dem Rost eine Fördervorrichtung, z. B. ein Förderband (7) befindet.

4. Anlage nach Anspruch 2 oder 3, dadurch gekennzeichnet, dass die Stützelemente (5) gruppenweise herabschwenkbar sind, um freigeschnittene Teile ausfallen zu lassen.

5. Anlage nach Anspruch 3, dadurch gekennzeichnet, dass die Fördervorrichtung umsteuerbar ist, um Teile nach einer Seite und Restgitter nach der anderen Seite wegzufördern.

6. Anlage nach Anspruch 5, dadurch gekennzeichnet, dass alle Stützelemente (5) gemeinsam herabschwenkbar sind.

7. Anlage nach einem der Ansprüche 1-6, dadurch gekennzeichnet, dass Stützelemente (5) vorgesehen sind, deren Länge je etwa der halben Breite des Stützrostes entspricht und die gegenüberliegenden Seiten des Stützrostes herunterschwenkbar gelagert sind.

8. Anlage nach einem der Ansprüche 3 bis 7, dadurch gekennzeichnet, dass das Förderband (7') auf einem in Laufrichtung des Förderbandes bewegbaren Schlitten (20) angeordnet ist, wobei die Laufrichtung sowohl des Förderbandes als auch des Schlittens umsteuerbar ist.

9. Anlage nach einem der Ansprüche 1 bis 8, dadurch gekennzeichnet, dass Haltezangen (30, 32) zum Festhalten des Werkstücks, z. B. eines Plattenrandes, vorgesehen sind.

10. Anlage nach Anspruch 9, dadurch gekennzeichnet, dass Haltezangen (30) mit Anschlagflächen (30a) für das Werkstück versehen sind.

11. Anlage nach einem der Ansprüche 8 bis 10, dadurch gekennzeichnet, dass ein quer zur Laufrichtung des Förderbandes (7') verstellbarer Ablagetisch (40) für ausgeschnittene Teile (41 bis 46) vorgesehen ist, über welchen das eine Ende des Förderbandes (7') fahrbar ist.

12. Verfahren zur Steuerung einer Anlage gemäss einem der Ansprüche 1 bis 11, dadurch gekennzeichnet, dass einzelne Stützelemente aus dem Bereich des Strahls bewegt, Gruppen von Stützelementen zum Abtransport von ausgeschnittenen Teilen bewegt, und alle oder die meisten Stützelemente bewegt, werden, um Restgitter des Flachmaterials zu entfernen.

13. Verfahren nach Anspruch 12, dadurch gekennzeichnet, dass Haltezangen für das Werkstück gelöst werden, nachdem die Stützelemente zum Abtransport des Restgitters ganz entfernt, z. B. heruntergeschwenkt sind.

## Claims

1. An installation for cutting a workpiece (3), in particular a flat workpiece, by means of a beam, in particular a laser beam, comprising a grate of supporting elements (5) for said workpiece (3), all of said elements being movable from a supporting position to an ineffective position away from said workpiece, characterised in that a common program control is provided for the displacement of said beam along a cutting line and for the individual motion of each supporting element (5), in order to allow to move away any desired group of supporting elements (5) or all supporting elements and thus to drop cut workpieces of any dimensions or residual grids.

2. Installation according to claim 1, characterised in that said supporting elements (5) are capable of being turned down or laterally moved out.

3. Installation according to claim 2, characterised in that a transport device, e.g. a conveyor belt (7), is disposed underneath said grate.

4. Installation according to claim 2 or 3, characterised in that said supporting elements (5) are capable of being turned down in groups in order to drop cutout pieces.

5. Installation according to claim 3, characterised in that said conveyor device is reversible in order to carry away pieces to one side and residual grids to the other.

6. Installation according to claim 5, characterised in that all supporting elements (5) are capable of being turned down in common.

7. Installation according to any one of claims 1 to 6, characterised in that supporting elements (5) are provided whose respective length approximately corresponds to half the width of said supporting grate, and in that the opposing sides of said supporting grate are journalled in such a manner as to be capable of being turned down.

8. Installation according to any one of claims 3 to 7, characterised in that said conveyor belt (7') is disposed on a slide (20) which is displaceable in the travelling direction of said conveyor belt, the travelling direction of the conveyor belt as well as that of the slide being reversible.

9. Installation according to any one of claims 1 to 8, characterised in that clamping tongs (30, 32) are provided for holding said workpiece, e.g. the edge of a plate.

10. Installation according to claim 9, characterised in that clamping tongs (30) are provided with abutment surfaces (30a) for said workpiece.

11. Installation according to one of claims 8 to 10, characterised in that a depositing table (40) for cut pieces (41 to 46) is provided which is displaceable transversely to the travelling direction of said conveyor belt (7') and over which one end of said conveyor belt (7') can be positioned.

12. A method for the control of an installation according to any one of claims 1 to 11, characterised in that individual supporting elements are moved out of the range of said beam, groups of supporting elements are moved for the removal of cut pieces, and all or most of said supporting elements are moved in order to remove residual grids of said flat stock.

13. Method according to claim 12, characterised in that said clamping tongs for said workpiece are released as soon as said supporting elements are completely removed, e.g. turned down for the removal of the residual grid.

## Revendications

1. Installation pour le découpage d'une pièce à usiner (3), plus particulièrement une pièce plate, au moyen d'un rayon, plus particulièrement un rayon laser, comprenant un grillage d'éléments de soutien (5) pour ladite pièce a usiner (3) pouvant tous être éloignés de la pièce à usiner à partir d'une position de soutien et amenés à une position inactive, caractérisée en ce qu'une commande par programme commune pour le déplacement du rayon le long d'une ligne de découpage et pour le mouvement individuel de chaque élément de soutien (5) est prévue afin de pouvoir éloigner tout groupe désiré d'éléments de soutien (5) ou tous les éléments de soutien (5) et ainsi laisser tomber des pièces découpées de toute dimension ou des squelettes résiduels.

2. Installation selon la revendication 1, caractérisée en ce que les éléments de soutien (5) sont capables d'être rabattus ou d'être latéralement dégagés.

3. Installation selon la revendication 2, caractérisée en ce que sous ladite grille se trouve un dispositif de transport tel qu'un convoyeur à bande (7).

4. Installation selon la revendication 2 ou 3, caractérisée en ce que les éléments de soutien (5) sont capables d'être rabattus par groupes afin de laisser tomber des pièces découpées.

5. Installation selon la revendication 3, caractérisée en ce que ledit dispositif de transport est réversible afin d'expédier les pièces d'un côté et les squelettes résiduels de l'autre.

6. Installation selon la revendication 5, caractérisée en ce que tous les éléments de soutien (5) sont rabattables en commun.

7. Installation selon l'une quelconque des revendications 1 à 6, caractérisée en ce que l'on prévoit des éléments de soutien (5) dont la longueur correspond chaque fois à la moitié de la largeur du grillage de soutien, et que les côtés opposés du grillage de soutien sont montés de manière rabattable.

8. Installation selon l'une quelconque des revendications 3 à 7, caractérisée en ce que le convoyeur à bande (7') est disposé sur un chariot (20) déplaçable dans la direction de déplacement du convoyeur à bande, la direction de déplacement du convoyeur à bande ainsi que celle du chariot étant réversible.

9. Installation selon la revendication 9, caractérisée en ce que des pinces de serrage (30) sont prévues pour immobiliser la pièce à usiner, par exemple le bord d'une plaque.

10. Installation selon la revendication 9, caractérisée en ce que les pinces de serrage (30) comportent des surfaces de butée (30a) pour la pièce à usiner.

11. Installation selon l'une quelconque des revendications 8 à 10, caractérisée en ce qu'une table de dépôt (40) prévue pour les pièces découpées (41 à 46) et réglable transversalement à la direction de déplacement du convoyeur à bande (7') est prévue sur laquelle peut être amenée l'une des extrémités du convoyeur à bande (7').

12. Procédé pour la commande d'une installation selon l'une quelconque des revendications 1 à 11, caractérisé en ce que des éléments de soutien individuels sont dégagés de la portée dudit rayon, des groupes d'éléments sont déplacés pour l'expédition de pièces découpées, et que tous ou la plupart des éléments de soutien sont déplacés pour expédier des squelettes résiduels du matériau plat.

13. Procédé selon la revendication 12, caractérisé en ce que les pinces de serrage pour la pièce à usiner sont desserrées dès que les éléments de soutien sont entièrement dégagés, par exemple rabattus, pour l'expédition du squelette résiduel.
